# FASCICULE DE BREVET EUROPEEN

(11) **EP 0 651 773 B1**
(45) Date de publication et mention de la délivrance du brevet: **03.09.1997**
(21) Numéro de dépôt: 93914776.5
(22) Date de dépôt: 29.06.1993
(51) Int. Cl.: C08G 73/10, C08J 3/09, D01F 6/74

(54) **SOLUTION DE POLYIMIDE ET LEUR PROCEDE D'OBTENTION**
POLYIMIDLÖSUNGEN UND VERFAHREN ZUR HERSTELLUNG
POLYIMIDE SOLUTIONS AND METHOD OF OBTAINING THEM

(30) Priorité: 23.07.1992 FR 9209327
(43) Date de publication de la demande: 10.05.1995
(73) Titulaire: S.N.C. KERMEL, F-69398 Lyon Cédex 03 (FR)
(72) Inventeur: MICHAUD, Philippe, Mobile, AL 36695 (US); RUSSO, Jean, F-69009 Lyon (FR)
(74) Mandataire: Esson, Jean-Pierre
(86) Numéro de dépôt international: FR9300648
(87) Numéro de publication internationale: WO9402535

(56) Documents cités:
- EP-A- 0 194 058
- CHEMICAL ABSTRACTS, vol. 111, no. 18, 30 Octobre 1989, Columbus, Ohio, US; abstract no. 154646n, 'Preparation of heat-resistant polyamides or polyimides' & JP-A-01054019

## Description

La présente invention concerne des solutions à base de polyimide directement filables et conformables.

Elle concerne également un procédé pour l'obtention de ces solutions ainsi que leur procédé de filage.

La préparation des polyimides à partir de diisocyanates et d'acides ou d'anhydrides est connue depuis longtemps.

Ainsi le FR 2107998 décrit la préparation des polyimides issus de dianhydride d'acide diphényl cétone - 3,3',4,4' tétra carboxylique et de diisocyanates. Mais une telle réaction nécessite un temps de réaction extrêmement long ce qui rend ce procédé couteux pour une application industrielle.

Pour diminuer le temps de réaction entre diisocyanates et dianhydrides, tout en obtenant des polymères de poids moléculaire suffisant pour permettre leur transformation, et solubles dans les solvants usuels selon l'USP 4001186, la polycondensation a été réalisée en présence de catalyseurs tels que des méthoxydes de métaux alcalins.

L' EP 0235388 préconise également l'utilisation d'un catalyseur, le fluorure de métal alcalin, éventuellement en combinaison avec un sel onium quaternaire pour l'obtention de polyimides exempts de gels.

Toutefois, la présence de catalyseurs est un élément défavorable pour l'obtention de polyimides, car pour obtenir des articles conformés, en particulier des fils possédant de bonnes caractéristiques, le catalyseur doit être éliminé avant la transformation ou le filage et cette élimination est difficile à réaliser simplement. De plus, pour des raisons économiques, le recyclage du catalyseur est nécessaire industriellement.

Il a maintenant été trouvé qu'il était possible d'obtenir des polyimides possédant un poids moléculaire élevé et solubles, sous forme de solutions directement conformables et filables, sans nécessiter de catalyseur, ni de longs temps de réaction. Plus particulièrement, la présente invention concerne des solutions limpides directement filables et conformables, contenant :
de 5 à 35 % en poids d'un polyimide comportant des unités de recurrence de formule : 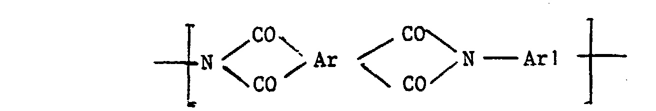 dans laquelle Ar représente un groupe tétravalent de formule 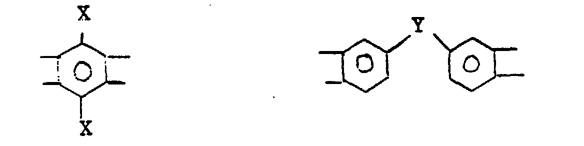 avec X : radical monovalent, identique ou différent, tel que H, -CH₃, -CF3, 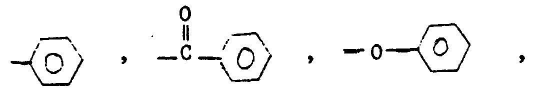 Y = radical divalent CO , O, SO₂, S, C(CH₃)₂ , CH₂, C(CF₃)₂ ou nul et Ar1 représente un groupe aromatique divalent, dans la diméthylalkylène urée (DMAU) anhydre, de pH ≤ 7, et ne contenant pas de catalyseurs tels que carbonate hydrocarbonate, hydroxyde de métal alcalin et sels d'acides polycarboxyliques de métal alcalin.
De préférence le group Ar représente un groupe de formule : 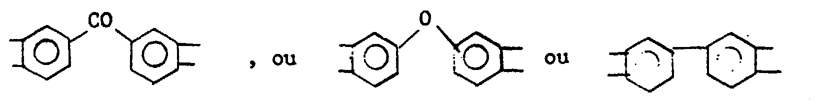 De préférence Ar1 comporte au moins 50 % de groupes tolylène.

De tels polymères possèdent de plus un indice de polydispersité faible, ce qui correspond à un resserrement de la distribution des masses moléculaires. L'indice de polydispersité (I) des polyimides selon l'invention, est généralement d'environ 2 ou même moins.

La présente invention concerne également un procédé pour l'obtention de solutions limpides, directement filables ou conformables, à base de polyimides, par réaction de polycondensation dans la diméthylalkylène urée (DMAU) anhydre, de pH≤7, en absence de catalyseur, à une température comprise entre 150°C et le point d'ébullition du solvant, la durée de la réaction étant inférieure ou égale à 6 heures, de préférence inférieure ou égale à 5 heures, puis dilution du polymère dans la diméthylalkylène urée anhydre, de pH≤7. La concentration en polymère avant dilution est généralement comprise entre 10 et 40 %, de préférence 15 et 35 % en poids, et la concentration finale dans le solvant est comprise entre 5 et 30 %.

Les solutions selon la présente invention, sont préparées par réaction dans la DMAU anhydre, de pH≤7, dans des proportions sensiblement stoechiométriques entre :
- un diisocyanate de formule OCN - Ar1 - NCO dans laquelle Ar1 représente un groupe aromatique divalent, de préférence un groupe constitué d'au moins 50 % de groupes tolylène
- un dianhydre d'acide tétracarboxylique de formule : 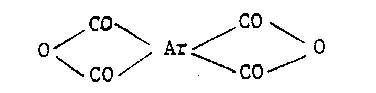 dans laquelle Ar représente un radical tétravalent de formule telle que : 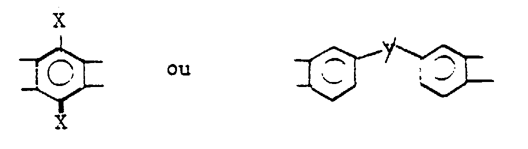 X représentant un radical monovalent, identique ou différent tel que :
   H, - CH₃, - CF₃, 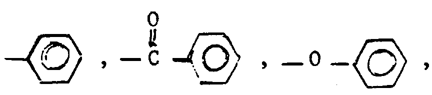 avec Y divalent de formule : O, S, ou CO, SO₂ , C(CH₃)₂, CH₂, C(CF₃)₂ ou nul, à une température comprise entre 150°C et le point d'ébullition du solvant, de préférence à une température comprise entre 180 et 200°C, pendant une durée inférieure ou égale à 6 heures, de préférence inférieure ou égale à 5 heures. De manière préférentielle, le rapport molaire diisocyanate dianhydride est compris entre 1 et 1,05.

Pour l'obtention des polyimides selon l'invention, on utilise de préférence les toluylènes -2,4 ou -2,6 diisocyanates. Le toluylène diisocyanate (TDI) se présente, dans le commerce, sous la forme d'un mélange de toluylène -2,4 et -2,6 - (TDI -2,4 et -2,6). Il est préférable que le mélange soit constitué d'au moins 60 % de TDI -2,4. D'autres diisocyanates aromatiques peuvent convenir. C'est le cas par exemple, du naphtalène diisocyanate, le m-phenylène diisocyanate, le diisocyanato 4,4' diphénylether, ou leurs mélanges.

Eventuellement, on peut ajouter aux diisocyanates cités ci-dessus, une proportion mineure d'un autre diisocyanate aromatique, ou cycloaliphatique dans le but d'améliorer certaines propriétés des articles conformés; par exemple, il peut être intéressant pour amélorer les propriétés mécaniques des fibres obtenues, de substituer jusqu'à 30 % de TDI par du méta ou paraphénylènediisocyanate ou du diphényléther 4,4' diisocyanate ou naphtalènediisocyanate.

Parmi les dianhydrides utilisables dans le cadre de la présente invention, on peut citer les dianhydrides d'acide pyromellique, d'acide diphényl 3,3' 4,4' tétracarboxylique, d'acide naphtalène -2,3,6,7-tétracarboxylique, d'acide diphénylether -3,3', 4, 4'- tétracarboxylique, d'acide diphénylsulfone -3,3',4,4' tétracarboxylique et de préférence, le dianydride d'acide diphényl cétone - 3, 3',4,4' tétracarboxylique. Plusieurs de ces dianydrides peuvent être utilisés en mélange.

Sous le terme dimethylalkylène urée utilisé dans la description, on entend la diméthylethylène urée ou la dimethyl propylène urée.

Celle-ci est utilisée sous forme anhydre, c'est-à-dire qu'elle contient moins ou 1000 ppm d'eau, de préférence moins de 500 ppm.

Bien que substantiellement anhydre, la DMAU doit présenter un pH ≤7. Cette mesure peut être simplement réalisée au moins d'un papier indicateur de pH préalablement humidifié.

Les polyimides, selon l'invention, sont faciles à préparer en milieu homogène et présentent à la fois des masses molaires suffisamment élevées pour permettre l'obtention d'articles conformés, fils, films, etc... de bonnes propriétés et une solubilité particulièrement bonne dans la DMAU pour permettre la transformation, le filmage ou le filage par exemple, dans de bonnes conditions.

De plus, la réaction est réalisée en un temps court inférieur à 6 heures, généralement inférieur à 5 heures et sans catalyseur, évitant ainsi les inconvénients techniques et les surcoûts dus aux catalyseurs.

Les bonnes propriétés des solutions selon l'invention sont liées à la fois aux monomères de départ, mais aussi à la présence de DMAU qui permet d'obtenir directement des viscosités élevées permettant le filage, le filmage ou toute transformation à partir des solutions.

D'autres solvants usuels, tels que le diméthyl acétamide (DMAC), le dimethylformamide (DMF) ou le N-methylpyrrolidone ne conduisent pas à partir des mêmes monomères à des polymères de viscosité suffisamment élevée.

Les solutions de polyimide selon l'invention, peuvent être filmées ou filées selon les procédés à sec ou à l'humide.

Parmi les solvants organiques polaires utilisables, on utilise la diméthylalkylène urée, par exemple la diméthyléthylène urée ou la diméthylpropylène urée. Ces solutions de filage doivent de plus présenter une viscosité permettant leur filage, généralement comprise entre 300 et 1000, de préférence 500 et 800 poises pour le filage humide, et 1500 à 3000 poises pour le filage à sec, mesurées au moyen d'un viscosimètre connu dans le commerce sous la marque EPPRECHT RHEOMAT 15.

La solution à filer peut posséder une concentration en polymère comprise entre 10 et 35 %, de préférence entre 15 et 25 %. Elle peut contenir divers adjuvants destinés à modifier l'aspect ou les propriétés finales des fils obtenus tels que, colorants, matifiants, stabilisants ...

La température de la solution de filage peut varier dans de grandes limites selon la viscosité de la solution à filer. Par exemple, une solution présentant une faible viscosité peut facilement être extrudée à température ordinaire, tandis qu'il est préférable d'extruder à chaud par exemple à 120°C ou même plus, une solution de viscosité élevée pour éviter d'utiliser de trop grandes pressions à la filière.

Les procédés de filage en solution, à sec ou à l'humide, sont réalisés de manière habituelle : après la formation des filaments, ceux-ci sont généralement étirés pour leur donner des propriétés mécaniques, lavés de manière connue pour éliminer le solvant résiduel, séchés et éventuellement surétirés à des températures élevées pour apporter aux filaments les propriétés mécaniques désirées.

Les fils à base de polyimide possèdent de remarquables caractéristiques mécaniques et une excellente tenue thermomécanique, ainsi qu'une bonne résistance au feu.

Les exemples ci-dessous sont donnés à titre indicatif et non limitatif pour illustrer l'invention.

### Exemple 1 :

Appareillage : Réacteur en verre de 1,5 l, équipé d'un agitateur de type ancre en acier inoxydable, d'une ampoule de coulée de 250 ml destinée à l'addition du solvant de dilution, d'une arrivée d'azote sur compte-bulle, vitesse de rotation 85 t/mn, d'une sonde thermométrique et d'un réfrigérant à reflux avec sortie sur compte-bulle. La sortie du réfrigérant est reliée à une colonne garnie de 600 g. de chaux sodée destinée à piéger le gaz carbonique qui se dégage au cours de la réaction de polycondensation. Une balance placée à proximité de l'installation permet d'enregistrer l'augmentation de poids de la colonne garnie de chaux sodée (accès direct en poids de CO₂ dégagé).

Le chauffage du réacteur est amené par un bain d'huile silicone piloté par système de régulation assisté d'un émetteur de programme de montée en température et éventuellement de maintien en isotherme à une température donnée.

### Réactifs :

- dianhydride d'acide diphénylcétone -3,3',4,4'-tétracarboxylique (BTDA) 161 g (0,5 mole)
- toluylène diisocyanate (TDI) 87,2 g
   consituté de 80 % TDI - 2,4 (0,50125 mole)
   et 20 % TDI - 2,6
- dimethylethylène urée (DMEU) de polycondensation 454 g.
- DMEU de dilution 313 g.

Mode opératoire : L'appareil étant purgé par un courant d'azote durant 1 heure, on charge sous léger contre-courant d'azote la DMEU réservée à la réaction de polycondensation et les réactifs, on met l'agitateur en mouvement, le chauffage de la masse réactionnelle étant démarré aussitôt en élevant la température progressivement de la température ambiante à 185°C en 3 heures 30 mn.

La masse réactionnelle dont la concentration en matière sèche est de 31% en poids est très visqueuse. On retire le bain d'huile et ajoute la DMEU de dilution : la concentration en matière sèche baisse de 31 % en poids à 21 % .

L'opération est abandonnée, agitation arrêtée, sous légère surpression d'azote. Quand la température de la masse est redescendue vers 50°C on démonte le réacteur et stocke la solution en container verre de 1 l.

Par analyse IR et RMN, on vérifie que la formation des groupements imide est totale.

### Résultats :

La solution de viscosité 370 poises est parfaitement homogène, filmable et filable.

La viscosité est mesurée au moyen d'un viscosimètre EPPRECHT RHEOMAT 15 - cuve D+E à 25°C.

### Exemple 2

On reproduit l'exemple 1 avec les monomères suivants :
- dianhydride d'acide diphénylether 3,3',4,4' tetracarboxylique 155 g.
- toluylène diisocyanate 87,2 g.
- DMEU de polycondensation 441 g.
- DMEU de dilution 304,8 g.

On opère de la manière indiquée dans l'exemple 1, en élevant la température de la température ambiante à 185°C pendant une durée de 2 heures.

Par analyse IR et RMN, on vérifie que la formation de groupements imide est totale.

On obtient une solution de concentration 31 % et après dilution dans la DMEU, de concentration 21 % ; la viscosité de la solution obtenue est de 470 poises, mesurée sur le viscosimètre indiqué dans l'exemple 1.

Elle est homogène, limpide et facile à transformer.

### Exemple 3

On reproduit l'exemple 1 en utilisant les monomères suivants :
- phenylène diisocyanate 1,3 (mPDI) 4,44 g. (0,01 mole)
- dianydride d'acide hexafluoroisopropylidène 2,2 phtalique de formule 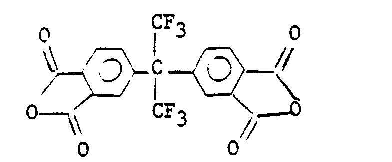 1,60 g. (0,01 mole)
- DMEU de polycondensation 13,95 g.
- DMEU de dilution 5,45 g.

On opère de la manière indiquée dans l'exemple 1 en élevant la température progressivement depuis la température ambiante jusqu'à 198°C environ, pendant une durée de 3 heures environ.

La concentration en polyimide est de 27 % et passe à 21 % après dilution .

Elle est homogène et limpide.

Par analyse IR et RMN, on vérifie que la formation de groupements imide est totale.

## Revendications

1. Solutions limpides directement conformables et filables, caractérisées par. le fait qu'elles contiennent:
- 5 à 35 % en poids d'un polyimide comportant des unités récurrentes de formule : 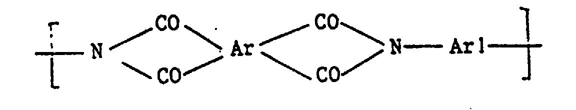 dans laquelle Ar représente un groupe tétravalent de formule : 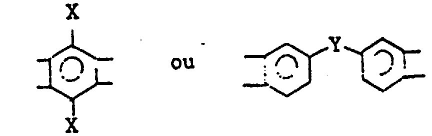 avec X radical monovalent, identique ou différent :
H , -CH₃ , -CF₃ , 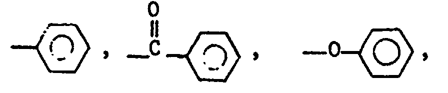 Y radical divalent de formule CO, O, SO₂, S, C(CH₃)₂, CH₂, C(CF₃)₂, Y peut être nul dans laquelle Ar1 est un groupe aromatique divalent,
- dans la diméthylalkylène urée (DMAU) anhydre, de pH 7 et contenant au plus 1000 ppm d'eau et en ce que la solution est exempte de catalyseurs tels que de carbonate, hydrogéno carbonate, hydroxyde de métal alcalin et de sels d'acides polycarboxylique de métal alcalin.

2. Solutions selon la revendication 1 caractérisées par le fait que Ar1 est constitué d'au moins 50 % de groupes tolylène.

3. Solutions selon la revendication 1 caractérisées par le fait que la DMAU est la diméthyléthylène urée.

4. Solutions selon la revendication 1, caractérisées par le fait que le groupe Ar a pour formule :

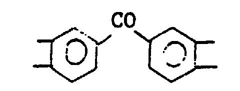

5. Procédé pour l'obtention de solutions directement filables et conformables à base de polyimides par polycondensation, dans la diméthylalkylène urée anhydre, de pH≤7, en l'absence de catalyseur, en proportion sensiblement stoechiométrique entre :
- un dianhydride d'acide tétracarboxylique de formule : 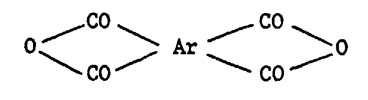 dans laquelle Ar représente un radical tétravalent de formule : 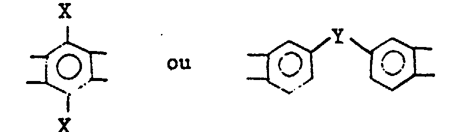 X représentant un groupe monovalent, identique ou différent, de formule
H, -CH₃ , -CF₃ , 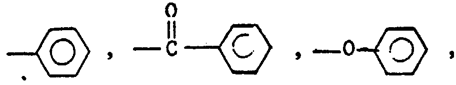 Y représentant un radical divalent de formule CO, O ,SO₂, S, C(CH₃)₂, CH₂, C(CF₃)₂, Y pouvant être nul,
- un diisocyanate de formule OCN - Ar1 - NCO dans laquelle Ar1 représente un groupe aromatique divalent, à une température comprise entre 150°C et le point d'ébullition du solvant, pendant une durée inférieure ou égale à 6 heures, puis dilution du polyimide obtenu dans la dimethylalkylène urée anhydre de pH ≤ 7, la concentration finale dans le solvant étant comprise entre 5 et 35%.

6. Procédé selon la revendication 5, caractérisée par le fait que la réaction est effectuée à une température comprise entre 180 et 200°C

7. Procédé selon la revendication 5, caractérisée par le fait que la durée de réaction est inférieure ou égale à 5 heures.

8. Procédé selon la revendication 5, caractérisée par le fait que le rapport pondéral diisocyanate/dianhydride est compris entre 1 et 1,05.

9. Fils et fibres obtenus par filage à sec ou à l'humide des solutions selon l'une des revendications 1 à 4.

## Patentansprüche

1. Direkt formbare und verspinnbare klare Lösungen, dadurch gekennzeichnet, daß sie enthalten:
- 5 Gew.-% bis 35 Gew.-% eines Polyimides mit wiederkehrenden Einheiten der Formel 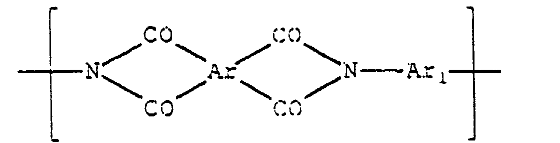 in der Ar eine tetravalente Gruppe der Formel 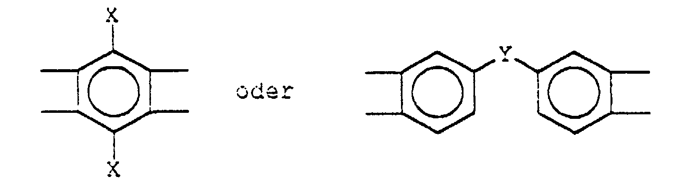 darstellt, mit dem monovalenten Rest X, der gleich oder verschieden ist und bedeutet:
H , -CH₃ , -CF₃ , 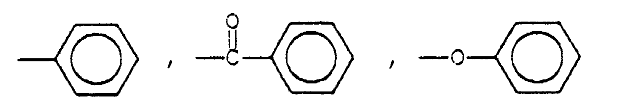 und dem divalenten Rest Y der Formel CO, O, SO₂, S, C(CH₃)₂, CH₂, C(CF₃)₂, wobei Y null sein kann,
und worin Ar1 eine divalente aromatische Gruppe ist,
- in wasserfreiem Dimethylalkylenharnstoff (DMAU) vom pH 7, der höchstens 1000 ppm Wasser enthält,
und dadurch, daß die Lösung von Katalysatoren wie Carbonat, Hydrogencarbonat, Alkalimetallhydroxid und den Polycarbonsäuresalzen der Alkalimetalle frei ist.

2. Lösungen nach Anspruch 1, dadurch gekennzeichnet, daß Ar1 mindestens zu 50 % aus Tolylengruppen gebildet wird.

3. Lösungen nach Anspruch 1, dadurch gekennzeichnet, daß das DMAU Dimethylethylenharnstoff ist.

4. Lösungen nach Anspruch 1, dadurch gekennzeichnet, daß die Gruppe Ar die Formel 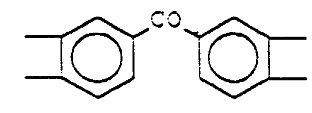 besitzt.

5. Verfahren zur Herstellung von direkt formbaren und verspinnbaren Lösungen auf der Basis von Polyimiden durch Polykondensation in wasserfreiem Dimethylalkylenharnstoff vom pH < 7 und in Abwesenheit eines Katalysators, in etwa stöchiometrischen Verhältnissen zwischen :
- einem Tetracarbonsäure-dianhydrid der Formel 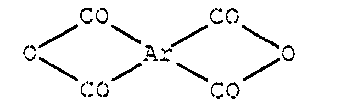 in der Ar einen tetravalenten Rest der Formel 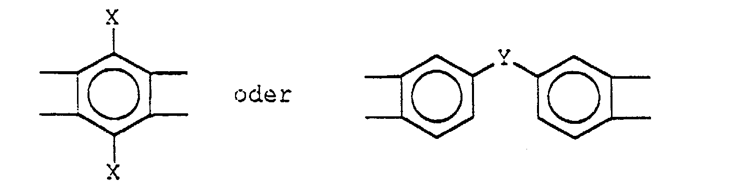 darstellt, mit dem monovalenten Rest X, der gleich oder verschieden ist und bedeutet:
H , -CH₃ , -CF₃, 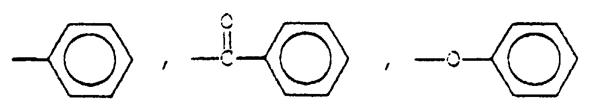 und einem divalenten Rest Y der Formel CO, O, SO₂, S, C(CH₃)₂, CH₂, C(CF₃)₂, wobei Y null sein kann, und
- einem Diisocyanat der Formel OCN-Ar1-NCO, in der Ar1 eine divalente aromatische Gruppe darstellt,
bei einer Temperatur zwischen 150 °C und dem Siedepunkt des Lösungsmittels sowie während einer Dauer von unter oder gleich 6 Stunden, und anschließende Verdünnung des erhaltenen Polyimides in wasserfreiem Dimethylalkylenharnstoff vom pH ≤ 7, wobei die Endkonzentration in dem Lösungsmittel zwischen 5 % und 35 % beträgt.

6. Verfahren nach Anspruch 5, dadurch gekennzeichnet, daß die Reaktion bei einer Temperatur zwischen 180 °C und 200 °C durchgeführt wird.

7. Verfahren nach Anspruch 5, dadurch gekennzeichnet, daß die Dauer der Reaktion weniger als oder gleich 5 Stunden beträgt.

8. Verfahren nach Anspruch 5, dadurch gekennzeichnet, daß das Gewichtsverhältnis Diisocyanat/Dianhydrid zwischen 1 und 1,05 beträgt.

9. Fäden und Fasern, erhalten durch Trockenspinnen oder Naßspinnen der Lösungen nach einem der Ansprüche 1 bis 4.

## Claims

1. Clear solutions which can be directly shaped and spun, characterized in that they contain:
- 5 to 35% by weight of a polyimide comprising repeating units of formula: 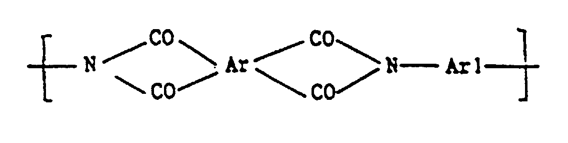 in which Ar represents a tetravalent group of formula: 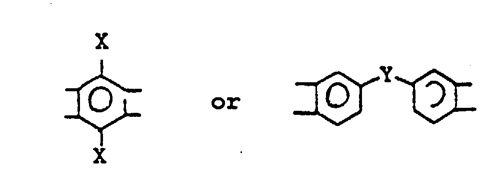 with X an identical or different monovalent radical:
H , -CH₃ , -CF₃ , 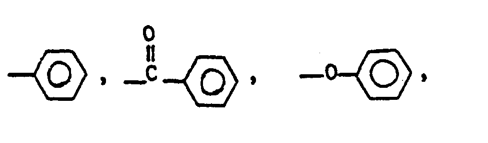 Y a divalent radical of formula CO, O, SO₂, S, C(CH₃)₂, CH₂ or C(CF₃)₂; it is possible for Y not to exist, in which Ar1 is a divalent aromatic group,
- in anhydrous dimethylalkyleneurea (DMAU), with a pH of 7 and containing at most 1000 ppm of water and in that the solution is devoid of catalysts such as alkali metal carbonate, hydrogencarbonate or hydroxide and alkali metal salts of polycarboxylic acids.

2. Solutions according to Claim 1, characterized in that Ar1 is composed of at least 50% of tolylene groups.

3. Solutions according to Claim 1, characterized in that the DMAU is dimethylethyleneurea.

4. Solutions according to Claim 1, characterized in that the group Ar has the formula:

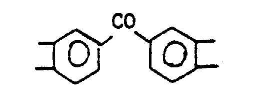

5. Process for producing polyimide-based solutions which can be directly spun and shaped by polycondensation, in anhydrous dimethylalkyleneurea, with a pH ≤ 7, in the absence of catalyst, in a substantially stoichiometric proportion, between:
- a tetracarboxylic acid dianhydride of formula: 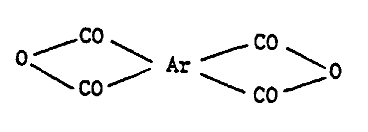 in which Ar represents a tetravalent radical of formula: 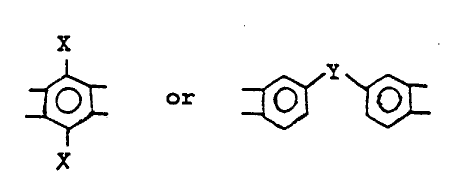 X representing an identical or different monovalent group of formula
H, -CH₃ , -CF₃ , 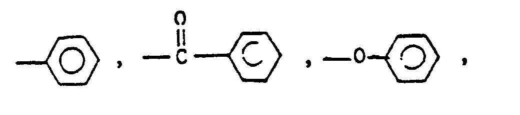 Y representing a divalent radical of formula CO, O, SO₂, S, C(CH₃)₂, CH₂ or C(CF₃)₂, it being possible for Y not to exist,
- a diisocyanate of formula OCN-Ar1-NCO in which Ar1 represents a divalent aromatic group, at a temperature between 150°C and the boiling point of the solvent, for a period less than or equal to 6 hours, and then dilution of the polyimide obtained in anhydrous dimethylalkylene urea, with a pH ≤ 7, the final concentration in the solvent being between 5 and 35%.

6. Process according to Claim 5, characterized in that the reaction is carried out at a temperature between 180 and 200°C.

7. Process according to Claim 5, characterized in that the duration of the reaction is less than or equal to 5 hours.

8. Process according to Claim 5, characterized in that the diisocyanate/dianhydride ratio by weight is between 1 and 1.05.

9. Yarns and fibres obtained by wet or dry spinning of the solutions according to one of Claims 1 to 4.
